# EUROPEAN PATENT APPLICATION

(11) **EP 4 496 083 A1**
(43) Date of publication of application: **22.01.2025**
(21) Application number: 24189283.5
(22) Date of filing: 17.07.2024
(51) Int. Cl.: H01M 50/14

(54) **BATTERY PACK**

(30) Priority: 21.07.2023 KR 20230095486
(71) Applicant: SAMSUNG SDI CO., LTD., Giheung-gu Yongin-si, Gyeonggi-do 17084 (KR)
(72) Inventor: LEE, Seokbong, 17084 Yongin-si (KR)
(74) Representative: Marks & Clerk LLP

(57) **Abstract**

A battery pack includes a battery cell having one or more electrode tabs, a case accommodating the battery cell, and a protection circuit module including a substrate. One or more substrate tabs on the substrate are connected to the one or more electrode tabs. A molding part is provided on the substrate, and the molding part includes a body, with a plurality of buffering members being provided on the body.

## Description

### BACKGROUND

### 1. Field

One or more embodiments relate to battery packs.

### 2. Description of the Related Art

Secondary batteries refer to batteries that are rechargeable, unlike primary batteries that are not rechargeable. Secondary batteries are used as energy sources for mobile devices, electric vehicles, hybrid vehicles, electric bicycles, uninterruptible power supplies, and the like. Secondary batteries are used in the form of a single battery or in the form of a pack in which a plurality of batteries are connected and packed into one unit, depending on the types of external devices to which they are applied.

The increase in the operation performance of processors included in electronic devices and the increase in the power requirements of electric vehicles have naturally led to an increase in the capacity of secondary batteries. Also, because secondary batteries should consider user convenience and secure desired power within a restricted space, the overcharge blocking voltage of secondary batteries has gradually increased and the overdischarge blocking voltage has gradually decreased, and, thus, the available area of battery packs using secondary batteries has expanded.

A battery pack includes a protection circuit module to prevent the overcharge, overdischarge, overcurrent, and short circuit of battery cells during use. The protection circuit module performs an overcharge protection function for preventing a swelling and explosion from occurring due to gas and heat generated from the battery cells if the battery cells are overcharged above a protection voltage. The protection circuit module also performs an overdischarge protection function for preventing the battery cells from being damaged by being discharged below a suitable voltage. The protection circuit module further performs an overcurrent blocking function for preventing the battery cells or the protection circuit module from being damaged due to an overcurrent caused by an error or a malfunction of an external device, and a short circuit protection function for preventing the battery cells or the protection circuit module from being damaged because an external load is short-circuited.

Unlike a protection circuit module of the related art in which parts are mounted on a substrate, there is a molding protection circuit module (MPCM) in which a molding part including a field effect transistor (FET), photonic integrated circuit (P-IC), and passive elements are coupled onto a substrate. However, unlike in the protection circuit module of the related art, in such a molding-type protection circuit module during a battery drop test a large area may collide with a jig used in the drop test and a molding part may crack.

Information described in this Background section was known to the inventors before achieving the present disclosure or is technical information acquired in the process of achieving the present disclosure. Therefore, this section may contain information that does not form the prior art that was previously known to the public before this disclosure.

### SUMMARY

One or more embodiments include a battery pack in which a molding part of a protection circuit module includes a buffering member to effectively absorb an impact applied to the protection circuit module if the battery pack is dropped.

However, problems solved by the disclosure herein are merely exemplary, and the problems to be solved by the present disclosure are not limited thereto to the express disclosures herein.

Additional aspects will be set forth in part in the description which follows and will be apparent from the description or may be learned by practice of the presented embodiments of the present disclosure.

According to one or more embodiments, a battery pack includes a battery cell including one or more electrode tabs, a case accommodating the battery cell, and a protection circuit module including a substrate, one or more substrate tabs provided on the substrate and connected to the one or more electrode tabs, and a molding part provided on the substrate, wherein the molding part includes a body, and a plurality of buffering members provided on the body.

The buffering members may be provided on side surfaces of the body that are opposite to each other in a widthwise direction of the body.

The molding part may further include a plurality of accommodation grooves concaved inward in both side surfaces (e.g. in side surfaces) of the body, and the plurality of buffering members may be provided in the plurality of accommodation grooves.

A portion of each of the buffering members may be accommodated in one of the accommodation grooves and the other portion (e.g. another portion) of each of the buffering member may protrude outward from one of the side surfaces of the body.

The accommodation grooves may be spaced apart from each other in a lengthwise direction of the body and may form a plurality of rows in a heightwise direction of the body.

The accommodation grooves included in one row may be coaxial with the accommodation grooves included in an adjacent row in the lengthwise direction of the body.

The accommodation grooves included in one row may alternate with the accommodation grooves included in an adjacent row in the lengthwise direction of the body.

A distance between centers of the accommodation grooves included in a row may be greater than diameters of the accommodation grooves.

A distance between end portions of two adjacent accommodation grooves included in adjacent rows and adjacent to each other in the heightwise direction of the body may be less than diameters of the accommodation grooves.

The accommodation grooves at one of the side surfaces of the body may alternate with the accommodation grooves at the other side surface of the body in a widthwise direction of the body.

Lines through the centers of the accommodation grooves in the other side surface of the body may extend to centers between two adjacent accommodation grooves at the one side surface of the body.

The accommodation grooves may be spaced apart from each other in a lengthwise direction of the body and may form a plurality of rows in a heightwise direction of the body, and the accommodation grooves included in one row may alternate with the accommodation grooves included in an adjacent row in the lengthwise direction of the body.

The accommodation grooves may have a hemisphere shape or a partially-cut sphere shape.

Inner end portions of the accommodation grooves may be closer to an outer surface of the body than the inner end portions are to a center portion of the body in a widthwise direction of the body.

A size of the buffering members accommodated in the plurality of accommodation grooves may be larger than a size of the buffering members protruding outside of the accommodation grooves.

Inner end portions of the accommodation grooves may be closer to a center portion of the body than the inner end portions are to an outer surface of the body in a widthwise direction of the body.

The molding part may further include a plurality of accommodation grooves extending between one side surface and the other side surface in a widthwise direction of the body, and the plurality of buffering members may fill the plurality of accommodation grooves such that both ends of each of the buffering members protrude outward beyond side surfaces of the body.

In a heightwise direction of the body, lower ends of the accommodation grooves may be above a center of the body.

In the widthwise direction of the body, cross-sectional areas of the plurality of accommodation grooves may increase toward a center portion of the body.

The plurality of buffering members may be positioned on side surfaces in a widthwise direction of the body, and the side surfaces at which the buffering members and the body contact each other may be on a plane.

At least some of the above and other features of the invention are set out in the claims.

Other aspects, features, and advantages other than those described above will become apparent from the following detailed description, the appended claims, and the accompanying drawings.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a state in which a battery cell and a case are coupled to each other;
FIG. 2 illustrates one surface of a protection circuit module;
FIG. 3 illustrates a side surface of the protection circuit module;
FIG. 4 illustrates the other surface of the protection circuit module;
FIG. 5 illustrates a state in which a buffering member is applied to a molding part;
FIG. 6 illustrates one surface of a molding part;
FIG. 7 illustrates a side surface of a molding part;
FIG. 8 illustrates a side surface of a molding part;
FIG. 9 illustrates one surface of a molding part;
FIG. 10 illustrates one surface of a molding part;
FIG. 11 illustrates a molding part;
FIG. 12 illustrates one surface of a molding part;
FIG. 13 illustrates one surface of a molding part; and
FIG. 14 illustrates one surface of a molding part.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

As used herein, the term "and/or" includes any and all combinations of one or more of the associated listed items. Expressions such as "at least one of," if preceding a list of elements, modify the entire list of elements and do not modify the individual elements of the list.

Some embodiments of the present disclosure and methods according thereto may be understood with reference to the detailed descriptions of the embodiments and the accompanying drawings. The described embodiments may have various modifications and be implemented in different forms, and the present disclosure is not limited to the embodiments described herein. Also, some or all of the features of various embodiments of the present disclosure may be combined with each other. The respective embodiments may be implemented independently or in association with each other. The described embodiments are provided as examples so that the present disclosure may be thorough and complete, and are also intended to completely convey the present disclosure to those of ordinary skill in the art to which the present disclosure pertains. The present disclosure may include all modifications, equivalents, and substitutions within the scope of the present disclosure. Thus, processes, elements, and technologies that are not necessary for the understanding of ordinary skill in the art may not be described.

Unless otherwise specified throughout the accompanying drawings and the present disclosure, like reference numerals, characters, or combinations thereof may refer to like elements, and thus, redundant descriptions thereof may be omitted for conciseness. Also, descriptions irrelevant to the present disclosure may be omitted in order to clearly describe the present disclosure.

In the drawings, the relative sizes of elements, layers, and areas may be exaggerated for clarity. The use of hatching and/or shading in the accompanying drawings may be generally intended to clarify the boundary between adjacent elements. Thus, the presence or absence of hatching or shading may not indicate desirable forms or requirements for particular materials, material properties, dimensions, ratios, commonalities between figure elements, and/or other characteristics, properties, attributes, or the like of an unspecified element.

Various embodiments may be described herein with reference to cross-sectional illustrations that are schematic illustrations of embodiments and/or intermediate structures. Thus, the shape of the figure may vary, for example, as a result of manufacturing technologies and/or tolerances. Also, particular structural or functional descriptions given herein are merely examples for describing embodiments according to the concept of the present disclosure. Thus, the embodiments described herein should not be construed as being limited to the shapes of illustrated areas and may include, for example, variations in shape depending on manufacturing processes.

The areas illustrated in the drawings may be schematic in nature and the shapes thereof may not be intended to illustrate and define the actual shapes of device areas. Also, as those of ordinary skill in the art may recognize, the described embodiments may be modified in various ways without departing from the scope of the present disclosure.

Numerous particular details may be presented herein to provide a complete understanding of various embodiments. However, various embodiments may be implemented without the particular details or including one or more of the particular details. In other cases, well-known structures and devices may be illustrated in the form of block diagrams to avoid unnecessarily obscuring various embodiments.

For ease of description herein, spatially relative terms such as "below", "above", "under", and "over" may be used to describe the relationship between one element or feature and another element or feature as illustrated in the drawings. Spatially relative terms may be intended to include various directions of devices in use or operation in addition to the directions illustrated in the drawings. For example, if a device in the drawings is turned over, elements or features described as "below" or "under" other elements or features may be oriented "above" the other elements or features. Thus, the example terms "below" and "under" may encompass both the directions of above and below. The device may be oriented in other directions (e.g., rotated 90 degrees or in other directions) and the spatially relative terms used herein should be interpreted accordingly. Likewise, if a first portion is described as being arranged "above" a second portion, this may mean that the first portion is arranged over or under the second portion.

The expression "in a plan view" may mean a view of an object portion from above, and the expression "in a schematic cross-sectional view" may mean a schematic cross-section taken by vertically cutting an object portion. The expression "in a side view" may mean that a first object may be above, below, or beside a second object and vice versa. Also, the term "overlapping" or "overlaying" may encompass layering, stacking, surfacing, extending, covering, partially covering, or any other suitable term that may be understood by those of ordinary skill in the art. The expression "not overlapping" may encompass meanings such as "separated from" or "spaced apart from" and any other suitable equivalents that may be recognized and understood by those of ordinary skill in the art. The terms "face" and "surface" may mean that a first object may directly or indirectly face a second object. If a third object is between a first object and a second object, the first object and the second object may indirectly face each other while facing each other.

If an element, a layer, a region, or a component is referred to as being "formed," "connected," or "coupled" to another element, it may be said to be: formed directly on a layer, a region, or a component; formed on another component, another layer, another region, or another component; or indirectly formed on, connected to, or coupled to another component. It also may be collectively referred to direct or indirect combinations or connections of elements, layers, regions, or components and integral or non-integral combinations or connections so that one or more elements, layers, regions, or components may be present. For example, when an element, layer, area or component is referred to as being "electrically connected" or "electrically coupled" to another element, layer, area or component, it may be said to be directly electrically connected or coupled to the other element, layer, area or component, or other elements, layers, regions, or components may be present. However, "direct connection" or "direct coupling" may mean that a component is directly connected or coupling to or is directly on another component without an intervening component therebetween. Also, herein, if a portion of a layer, film, area, guide plate, or the like is formed on another portion, the formation direction is not limited to the upper surface thereof and the portion may also be formed on the side surface or lower surface of the other portion. If a portion of a layer, film, area, guide plate, or the like is formed "under" another portion, the portion may be "directly under" the other portion or there may be another intervening portion between the portion and the other portion. Moreover, other expressions such as "between", "directly between", "adjacent to", and "directly adjacent to" describing the relationships between components may be similarly interpreted. Also, if an element or layer is referred to as being "between" two elements or layers, it may be the only element or layer between the two elements or layers or there may be one or more other intervening elements or layers therebetween.

For the purposes of the present disclosure, an expression such as "at least one of" or "any one of" may not define the order of individual elements. For example, "at least one of X, Y, and Z", "at least one of X, Y, or Z", or "at least one selected from the group consisting of X, Y, and Z" may include only X, only Y, only Z, or any combination of two or more of X, Y, and Z. Similarly, expressions such as "at least one of A and B" and "at least one of A or B" may include A, B, or A and B. Throughout the present disclosure, the term "and/or" may include any and all combinations of one or more of the associated listed items. For example, an expression such as "A and/or B" may include A, B, or A and B.

Although terms such as "first", "second", and "third" may be used herein to describe various elements, components, areas, layers, and/or cross-sections, these elements, components, areas, layers, and/or cross-sections may not be limited by these terms. These terms are only used to distinguish one element, component, area, layer, or cross-section from another element, component, area, layer, or cross-section. Thus, a first element, component, area, layer, or cross-section described below may be referred to as a second element, component, area, layer, or cross-section without departing from the scope of the present disclosure. Describing an element as a "first" element may not require or imply the presence of a second element or other elements. Terms such as "first" and "second" may be used herein to distinguish between different categories or element sets. For clarity of representation, terms such as "first" and "second" may respectively refer to "first category (or first set)" and "second category (or second set)".

The terms used herein are merely for the purpose of describing particular embodiments and are not intended to limit the scope of the present disclosure. As used herein, the singular forms may be intended to include the plural forms as well and the plural forms may also be intended to include the singular forms as well, unless the context clearly indicates otherwise. The terms "comprise", "include", and "have" used herein may be intended to specify the presence of stated features, integers, steps, or operations. These terms may not be intended to preclude the presence or addition of one or more other functions, steps, operations, components, and/or groups thereof.

If one or more embodiments may be implemented differently, a particular process order may be performed differently from the described order. For example, two consecutively described processes may be performed substantially at the same time or performed in an order opposite to the described order.

The terms "substantially", "about", "approximately", and similar terms may be used as terms of approximation rather than terms of degree and may be intended to describe inherent deviations in measured or calculated values. As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein may have the same meanings as commonly understood by those of ordinary skill in the art to which the present disclosure belongs. Terms such as those defined in commonly used dictionaries should be interpreted as having meanings consistent with their meanings in the context of the relevant art and/or the present disclosure and should not be interpreted in idealized or overly formal senses unless explicitly so defined herein.

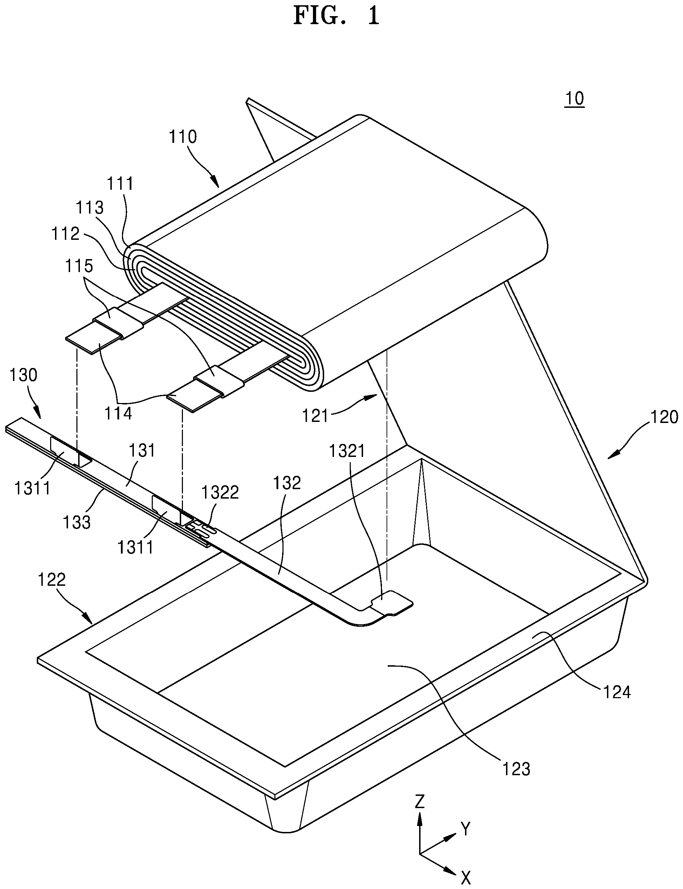

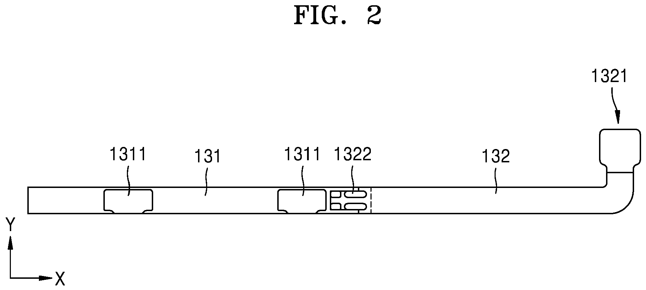

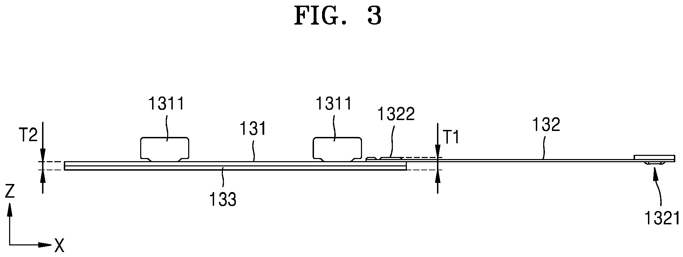

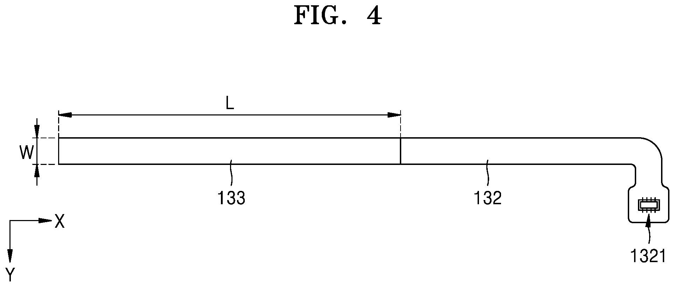

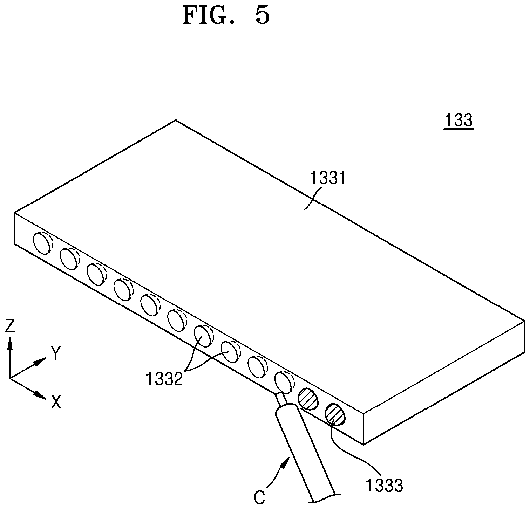

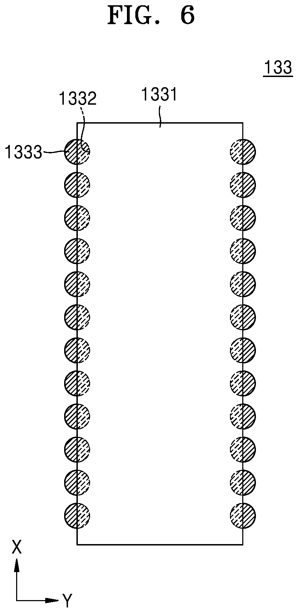

FIG. 1 illustrates a battery cell 110 and a case 120 that can be coupled to each other, FIG. 2 illustrates one surface of the protection circuit module 130, FIG. 3 illustrates a side surface of the protection circuit module 130, FIG. 4 illustrates the other surface of the protection circuit module 130, FIG. 5 illustrates a state in which a buffering member 1333 is applied to a molding part 133, and FIG. 6 illustrates one surface of the molding part 133.

A battery pack 10 may be a pouch-type secondary battery and may be used with desktops, tablets, smartphones, laptops, and the like. In other embodiments, the battery pack 10 may be a can-type or cylindrical secondary battery and may be used with to tablet PCs, smartphones, vehicles, and the like. Hereinafter, for convenience of description, the description will focus on embodiments where the battery pack 10 is a pouch-type battery pack.

The battery pack 10 includes a battery cell 110, a case 120, and a protection circuit module 130.

The battery cell 110 may be manufactured in the form of a jelly roll by winding a separator 113 between a first electrode plate 111 and a second electrode plate 112. In other embodiments, the battery cell 110 may be manufactured in the form of a stack by stacking a separator 113 between a plurality of first electrode plates 111 and a plurality of second electrode plates 112. In other embodiments, the battery cell 110 may be manufactured by applying both a jelly roll and a stack.

The first electrode plate 111 may include a first active material coating portion formed by intermittently coating a first active material on a first base material that is a sheet-shaped conductive material, and a first uncoated portion that is a portion where the first base material is exposed because the first active material is not coated. For example, the first electrode plate 111 may be a negative electrode plate, and the first active material may be a negative electrode active material including a carbon material such as crystalline carbon, amorphous carbon, a carbon composite, or carbon fiber, a lithium metal, or a lithium alloy.

The second electrode plate 112 may have a different polarity than the first electrode plate 111. The second electrode plate 112 may include a second active material coating portion formed by intermittently coating a second active material on a second base material that is a sheet-shaped conductive material, and a second uncoated portion that is a portion where the second base material is exposed because the second active material is not coated. For example, the second electrode plate 112 may be a positive electrode plate, and the second active material may include a positive electrode active material including lithium such as LiCoO₂, LiNiO₂, LiMnO₂, LiMn₂O₄,

LiNi_{1-x-y}CoₓM_{y}O₂ (where M is a metal), or LiFePO₄ (LFP).

The separator 113 may be positioned between the first electrode plate 111 and the second electrode plate 112. The separator 113 may insulate the first electrode plate 111 and the second electrode plate 112 from each other and may provide for the exchange of lithium ions between the first electrode plate 111 and the second electrode plate 112. The separator 113 may have a sufficient length to completely insulate the first electrode plate 111 and the second electrode plate 112 from each other even if the battery cell 110 contracts or expands during the charging/discharging process of the battery pack 10.

One or more electrode tabs 114 may be on one side of the battery cell 110. The electrode tabs 114 may be a pair of electrode tabs 114 that correspond to the first electrode plate 111 and the second electrode plate 112. The pair of electrode tabs 114 may be respectively provided to the first electrode plate 111 and the second electrode plate 112 and may protrude on one side thereof. One of the electrode tabs 114 may be electrically connected to one side of the first uncoated portion of the first electrode plate 111 and may extend toward the outside of the battery cell 110. The other of the electrode tabs 114 may be electrically connected to one side of the second uncoated portion of the second electrode plate 112 and may extend toward the outside of the battery cell 110.

Each of the electrode tabs 114 may be provided with a film 115. The film 115 may be provided at one side surface of the electrode tab 114 or may cover the electrode tab 114. The film 115 may seal the electrode tab 114 that is exposed outside the battery cell 110. For example, in order to prevent a short circuit from occurring because the electrode tab 114 contacts an exposed metal layer at an end portion of a seal 124 of the case 120 (which will be described below). The film 115 may be thermally fused to the seal 124 such that the electrode tab 114 and the seal 124 are closely coupled to each other.

The case 120 may form the exterior of the battery pack 10, with the battery cell 110 being positioned in the case 120. The shape and size of the case 120 are not limited and may have a shape and size corresponding to the battery cell 110. For example, as illustrated in FIG. 1, the case 120 may have a rectangular hexahedral shape with an open inside. Alternatively, the case 120 may have a polyhedral or cylindrical shape. The case 120 may include a cover 121, a lower case 122, an internal space 123, and a seal 124.

The lower case 122 may include an internal space 123 having a greater size than the battery cell 110, and the battery cell 110 may be inserted into the internal space 123. The cover 121 may be provided at the upper surface of the lower case 122 in an openable/closable manner to cover the battery cell 110 when the battery cell 110 is inserted into the internal space 123.

The seal 124 may be positioned along the upper edge of the lower case 122. As illustrated in FIG. 1, a portion of the electrode tab 114 may be exposed outside the case 120 in a state where the battery cell 110 is accommodated in the case 120. The film 115 provided at the electrode tab 114 may be positioned between the cover 121 and the lower case 122 in the area of the seal 124. Thus, the battery cell 110 is accommodated in the case 120.

The protection circuit module 130 may include an electric circuit and various parts for preventing the overcharge, overdischarge, overcurrent, and short circuit of the battery cell 110. As illustrated in FIG. 1, the protection circuit module 130 may be provided outside the case 120 and may be connected to the electrode tab 114. The protection circuit module 130 may have a flat panel shape to support the pair of electrode tabs 114. The protection circuit module 130 may include a substrate 131, a connection part 132, and a molding part 133.

As illustrated in FIG. 1, the substrate 131 may support other components of the protection circuit module 130, the connection part 132 for connecting an external device (e.g., a controller) and the protection circuit module 130 to each other may be on one side of the substrate 131, and the molding part 133 provided at one side surface of the substrate 131. A control circuit and various parts for controlling the overcharge, overdischarge, and overcurrent of the battery cell 110 may be positioned on the substrate 131.

The substrate 131 includes one or more substrate tabs 1311. As illustrated in FIGS. 1 to 3, a plurality of substrate tabs 1311 may be spaced apart from each other along a surface of the substrate 131. The number of substrate tabs 1311 may be equal to the number of the electrode tabs 114 of the battery cell 110, for example, there may be two electrode tabs 114. A first portion of the substrate tab 1311 may be positioned at the upper surface of the substrate 131 and a second portion may be bendable with respect to the first portion. In a state where the electrode tab 114 is positioned at a portion of the substrate tab 1311 on the substrate 131, the substrate tab 1311 may be bent toward the electrode tab 114 and then the electrode tab 114 and the substrate tab 1311 may be connected to each other by laser welding or the like. The substrate tab 1311 may include a metal material, for example, nickel.

The connection part 132 may have a thin plate shape and may connect an external device and the substrate 131 to each other. The connection part 132 may include a connection area 1322 connected to the substrate 131 at one end thereof and a connector 1321 for connection to an external device at the other end thereof. In the connection area 1322, the connection part 132 may be connected to the substrate 131 by welding or the like.

The molding part 133 may be provided at on surface of the substrate 131 that is opposite to the surface where the substrate tabs 1311 are provided. The molding part 133 may be at the rear surface of the substrate 131 and may have the same length as the substrate 131. A length L of the molding part 133 may be about 40 mm to about 50 mm, and a width W of molding part 133 may be about 3 mm to about 4 mm in example embodiments. The length L of the molding part 133 may be about 42 mm to about 46 mm and the width W of the molding part 133 may be about 3.2 mm to about 3.8 mm in example embodiments.

Various parts such as FETs, P-ICs, and passive elements for controlling the battery cell 110 may be provided inside the molding part 133. Thus, in the protection circuit module 130, not all of the parts need to be mounted on the substrate 131, the parts may be simply and securely on the substrate 131 by coupling the molding part 133 to the substrate 131 in a configuration where all or some of the parts are at the molding part 133.

As illustrated in FIG. 3, a total thickness T1 of the protection circuit module 130 including the substrate 131, the connection part 132, and the molding part 133 may be about 2 mm to about 3 mm. In more specification embodiments, the total thickness T1 of the protection circuit module 130 may be about 2.3 mm to about 2.7 mm.

As illustrated in FIG. 3, a thickness T2 of the substrate 131 and the molding part 133 may be about 1 mm to about 2 mm. In more specific embodiments, the thickness T2 of the substrate 131 and the molding part 133 may be about 1.2 mm to about 1.8 mm.

The molding part 133 may include a body 1331, an accommodation groove 1332, and a buffering member 1333. As illustrated in FIG. 5, the body 1331 may form the external shape of the molding part 133 and may have a plurality of parts therein. The body 1331 may have a rectangular hexahedral shape and one surface thereof may be positioned on the substrate 131.

A plurality of accommodation grooves 1332 may be in one or both side surfaces of the body 1331. As illustrated in FIGS. 5 and 6, the plurality of accommodation grooves 1332 may be spaced apart from each other in a row in the lengthwise direction of the body 1331 (e.g., the X-axis direction) on both side surfaces of the body 1331. The accommodation grooves 1332 may be concaved inward in the widthwise direction of the body 1331 (e.g., the Y-axis direction) at the side surface of the body 1331 and may have the shape of a hemisphere or a partially-cut sphere. In a configuration where a plurality of buffering members 1333 are provided in the plurality of accommodation grooves 1332, a portion of each of the buffering members 1333 may be accommodated in one of the accommodation grooves 1332 and the other portion of each buffering member 133 may protrude outward beyond the side surface of the body 1331. As illustrated in FIG. 6, the accommodation grooves 1332 may have a hemispherical shape, and the buffering members 1333 may have a spherical shape in which the half of the buffering members 1333 are accommodated in the accommodation grooves 1332 and the other half of the buffering members 1333 protrude outward from the side surface of the body 1331. A size of portion of the buffering members 1333 accommodated in the accommodation grooves 1332 may be larger than in a size of portion of the buffering members 1333 protruding outside of the accommodation grooves.

FIGS. 5 and 6 illustrate that 10 accommodation grooves 1332 are formed in each of both side surfaces of the body 1331. However, the number of accommodation grooves 1332 may be 9 or less or 11 or more. The accommodation grooves 1332 respectively provided in both side surfaces of the body 1331 may be at the same position in the lengthwise direction of the body 1331.

The buffering members 1333 may be applied to the accommodation grooves 1332 by a coating device C. Portions of the buffering members 1333 applied to the accommodation grooves 1332 may be accommodated in the accommodation grooves 1332 and the other portions of the buffering members 1333 may protrude outward from the accommodation groove 1332 beyond the side surface of the body 1331. Thus, if the battery pack 10 is dropped, the buffering members 1333 may first collide with another object (e.g., the ground) or the like to absorb an impact applied to the protection circuit module 130, thereby preventing the substrate 131, the connection part 132, and/or the molding part 133 from being damaged. The buffering members 1333 may include silicone or UV coating agents.

The accommodation grooves 1332 and the buffering members 1333 may be formed on both side surfaces of the body 1331, and the accommodation grooves 1332 may be formed only to a shallow depth into the body 1331 so as not to affect a plurality of parts inside the molding part 133. For example, the depth of the accommodation groove 1332 may be about 1 % to about 5 % of the width of the body 1331. The inner end portion of the accommodation groove 1332 may be closer to an outer surface of the body 1331 than to a center portion of the body 1331 in a widthwise direction of the body 1331 (e.g., the Y-axis direction).

As such, in the battery pack 10, the molding part 133 of the protection circuit module 130 may include a plurality of buffering members 1333 on both side surfaces of the body 1331, thereby preventing damage to the molding part 133 by absorbing an impact applied to the molding part 133 if the battery pack 10 is dropped.

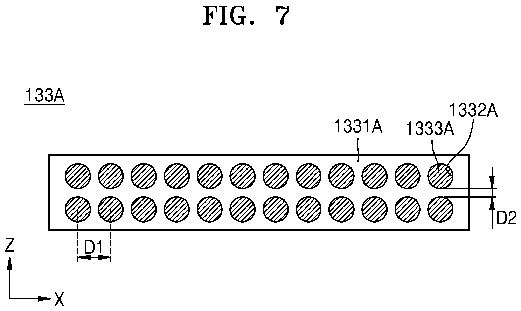

FIG. 7 illustrates a side surface of a molding part 133A according to other embodiments.

The molding part 133A according to this embodiment may have a different configuration in the accommodation grooves 1332A and the buffering members 1333A, compared to the molding part 133 described above. Hereinafter, for convenience of description, the molding part 133A will be described focusing on aspects that are different from that of the molding part 133, and other aspects of the molding part 133A may be the same as that of the molding part 133.

The molding part 133A may include a body 1331A, an accommodation groove 1332A, and a buffering member 1333A. The accommodation grooves 1332A may be formed in both side surfaces of the body 1331A and be concaved inward in the widthwise direction of the body 1331A (e.g., the Y-axis direction), and there may be a plurality of rows of accommodation grooves 1332A. As illustrated in FIG. 7, the plurality of accommodation grooves 1332A may be spaced apart from each other in the lengthwise direction of the body 1331A (e.g., the X-axis direction) to form one row. The plurality of rows of accommodation grooves 1332A may be formed in the heightwise direction of the body 1331A (e.g., the Z-axis direction). The accommodation grooves 1332A in adjacent rows may be at the same position in the lengthwise direction of the body 1331A. For example, a plurality of accommodation grooves 1332A included in one row may be coaxial with a plurality of accommodation grooves 1332A included in an adjacent row in the lengthwise direction of the body 1331A.

The rows of the accommodation grooves 1332A may be spaced apart from each other in the heightwise direction of the body 1331A, and a plurality of accommodation grooves 1332A in one row may be spaced apart from each other by a distance D1 in the lengthwise direction thereof. Herein, the distance D1 is the distance between the centers of adjacent accommodation grooves 1332A and may be greater than the diameter of the accommodation groove 1332A. A distance D2 between the rows of the accommodation grooves 1332A may be less than the diameter of the accommodation grooves 1332A, with the distance D2 being the distance between the upper end and lower end of the adjacent accommodation grooves 1332A. FIG. 7 illustrates two rows of accommodation grooves 1332A; however, the number of rows may be 3 or more.

A buffering member 1333A may be applied to each of the plurality of accommodation grooves 1332A. Thus, as illustrated in FIG. 7, the plurality of buffering members 1333A may also be arranged in the lengthwise direction and heightwise direction of the body 1331A. In a state where portions of the buffering members 1333A are accommodated in the accommodation grooves 1332A, the other portions of the buffering members 1333A may protrude to outside the body 1331A. Thus, the buffering members 1333A may contact another object if the molding part 133A is dropped. As such, the molding part 133A may improve the buffering effect by having a plurality of rows of buffering members 1333A on both side surfaces of the body 1331A.

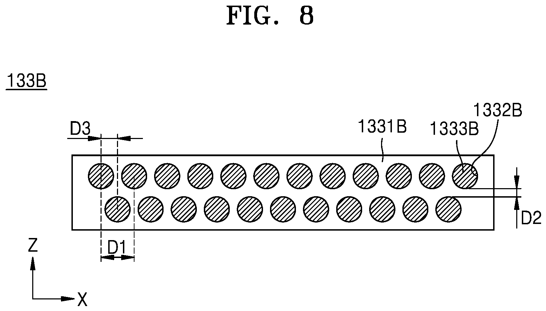

FIG. 8 illustrates a side surface of a molding part 133B.

The molding part 133B according to this embodiment may have a different configuration in the accommodation grooves 1332B and the buffering members 1333B compared to the molding parts described above. Hereinafter, for convenience of description, the molding part 133B will be described focusing on the aspects that are different from that of the above-described molding parts, and other aspects of the molding part 133B may be the same as that of the above-described molding parts.

The molding part 133B may include a body 1331B, accommodation grooves 1332B, and buffering members 1333B. The accommodation grooves 1332B may be formed in both side surfaces of the body 1331B and be concaved inward in the widthwise direction of the body 1331B. The accommodation grooves 1332B may be formed in a plurality of rows. As illustrated in FIG. 8, a plurality of accommodation grooves 1332B may be spaced apart from each other in the lengthwise direction of the body 1331B (e.g., the X-axis direction) to form one row. Also, a plurality of rows of accommodation grooves 1332B may be in the heightwise direction of the body 1331B (e.g., the Z-axis direction). The accommodation grooves 1332B in adjacent rows may be at different positions in the lengthwise direction of the body 1331B. For example, one accommodation groove 1332B in a first row may be between two adjacent accommodation grooves 1332B in a second row, and vice-versa.

The rows of the accommodation grooves 1332B may be spaced apart from each other in the heightwise direction of the body 1331B, and a plurality of accommodation grooves 1332B in one row may be spaced apart from each other by a distance D1 in the lengthwise direction thereof. Herein, the distance D1 is the distance between the centers of adjacent accommodation grooves 1332B and may be greater than the diameter of the accommodation groove 1332B. Also, a distance D2 between the rows of the accommodation grooves 1332B may be less than the diameter of the accommodation grooves 1332B, with the distance D2 being the distance between the end portions of two adjacent accommodation grooves 1332B in the heightwise direction of the body 1331B. Also, accommodation grooves 1332B in the second row between two adjacent accommodation grooves 1332B in the first row may be spaced apart from each other by a distance D3 in the lengthwise direction thereof, with the distance D3 being the distance between the centers of the accommodation grooves 1332B. The distance D3 may be greater than the diameter of the accommodation groove 1332B. Also, accommodation grooves 1332B in the second row may be positioned such that a line through the center of the accommodation grooves 1332B in the second row passes through the center between two adjacent accommodation grooves 1332B in the first row, and vice-versa. A plurality of accommodation grooves 1332B included in any one row may alternate with a plurality of accommodation grooves 1332B included in an adjacent row in the lengthwise direction of the body 1331B. Thus, the plurality of accommodation grooves 1332B in different rows may alternate with each other in a zigzag manner.

A buffering member 1333B may be applied to each of the plurality of accommodation grooves 1332B. Thus, as illustrated in FIG. 8, the plurality of buffering members 1333B may also be positioned in the lengthwise direction and heightwise direction of the body 1331B. In a state where portions of the buffering members 1333B are accommodated in the accommodation grooves 1332B, the other portions of the buffering members 1333B may protrude outside the body 1331B. Thus, the buffering members 1333B may contact another object if the molding part 133B is dropped. Thus, the molding part 133B may have an improved buffering effect by having a plurality of rows of buffering members 1333B on both side surfaces of the body 1331B. Also, the buffering members 1333B in different rows may be in a zigzag manner, thereby preventing an impact from being applied in the space between adjacent buffering members 1333B if the molding part 133B is dropped.

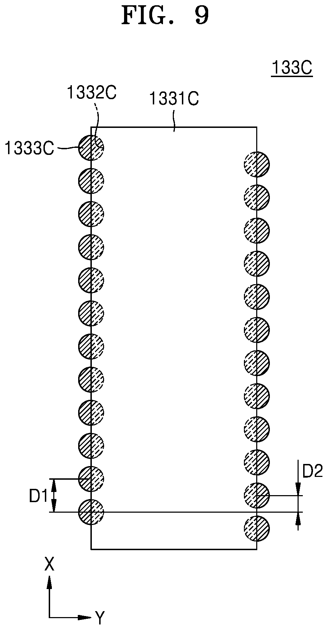

FIG. 9 illustrates one surface of a molding part 133C.

The molding part 133C according to this embodiment may have a different configuration in the accommodation grooves 1332C and the buffering members 1333C as compared to the molding parts according to the above-described embodiments. Hereinafter, for convenience of description, the molding part 133C will be described focusing on the aspects that are different from that of the above-described molding parts, and the other aspects of the molding part 133C may be the same as that of the above-described molding parts.

The molding part 133C may include a body 1331C, the accommodation grooves 1332C, and the buffering members 1333C. The accommodation grooves 1332C may be formed in both side surfaces of the body 1331C and may be concaved inward in the widthwise direction of the body 1331C (e.g., the Y-axis direction). A plurality of accommodation grooves 1332C on a first side surface of the body 1331C may alternate with a plurality of accommodation grooves 1332C on a second side surface of the body 1331C in a zigzag manner. For example, a plurality of accommodation grooves 1332C at one side surface of the body 1331C may alternate with a plurality of accommodation grooves 1332C in the other side surface of the body 1331C in the widthwise direction of the body 1331C. A plurality of accommodation grooves 1332C in one of the side surfaces of the body 1331C may be on a line that extends to a center between two adjacent accommodation grooves 1332C at the other side surface of the body 1331C, and vice-versa.

As illustrated in FIG. 9, a plurality of accommodation grooves 1332C of the body 1331C may be spaced apart from each other by a distance D1 in the lengthwise direction of the body 1331C. Herein, the distance D1 is the distance between the centers of adjacent accommodation grooves 1332C, and the distance D1 may be greater than the diameter of the accommodation groove 1332C. As illustrated in FIG. 9, the accommodation groove 1332C at one side surface of the body 1331C and the accommodation groove 1332C in the other side surface of the body 1331C may be spaced apart from each by a distance D2, with the distance D2 being the distance between the centers of adjacent accommodation grooves 1332C. The distance D2 may be less than the diameter of the accommodation groove 1332C. Thus, a plurality of accommodation grooves 1332C at one side surface and the other side surface of the body 1331C may alternate with each other in a zigzag manner.

A buffering member 1333C may be applied to each of the plurality of accommodation grooves 1332C. Thus, as illustrated in FIG. 9, the buffering members 1333C may also alternate with each other at one side surface and the other side surface of the body 1331C in a zigzag manner. In a state where portions of the buffering members 1333C are accommodated in the accommodation grooves 1332C, the other portions of the buffering members 1333C may protrude outside the body 1331C, and, thus, the buffering members 1333C may contact an object if the molding part 133C is dropped. As such, the molding part 133C may improve a buffering effect by having the buffering members 1333C alternate on both side surfaces of the body 1331C.

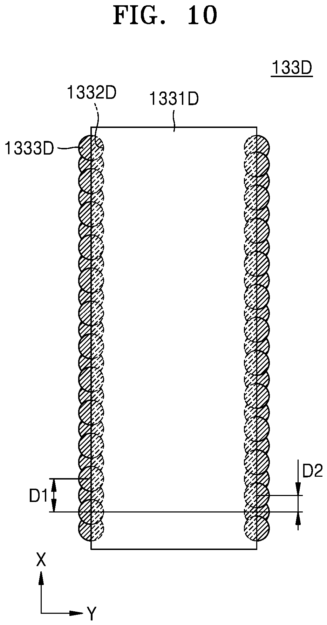

FIG. 10 illustrates one surface of a molding part 133D.

The molding part 133D according to this embodiment may have a different configuration in the accommodation grooves 1332D and the buffering members 1333D compared to the molding part 133 according to the above-described embodiments. Hereinafter, for convenience of description, the molding part 133D will be described focusing on aspects different from that of the above-described molding parts, and other aspects of the molding part 133D may be the same as that of the above-described molding parts.

The molding part 133D may include a body 1331D, accommodation grooves 1332D, and buffering members 1333D.

The accommodation grooves 1332D may be formed in both side surfaces of the body 1331D and be concaved inward in the widthwise direction of the body 1331D (e.g., the Y-axis direction). A plurality of accommodation grooves 1332D at one side surface of the body 1331D may alternate with a plurality of accommodation grooves 1332D in the other side surface of the body 1331D in a zigzag manner. As illustrated in FIG. 10, a plurality of accommodation grooves 1332D of the body 1331D may be spaced apart from each other by a distance D1 in the lengthwise direction thereof. Herein, the distance D1 is the distance between the centers of adjacent accommodation grooves 1332D and may be greater than the diameter of the accommodation groove 1332D. Also, among the plurality of accommodation grooves 1332D at a first side surface of the body 1331D, a plurality of accommodation grooves 1332D may be provided in a second side surface of the body 1331D such that lines extending through the center portions of the plurality of accommodation grooves 1332D on the first side surface extend through center portions between two adjacent accommodation grooves 1332D on the second side surface, and vice-versa. As illustrated in FIG. 10, an accommodation groove 1332D at one side surface of the body 1331D and the accommodation groove 1332D in the other side surface of the body 1331D may be spaced apart from each by a distance D2, with the distance D2 being the distance between the centers of adjacent accommodation grooves 1332D. The distance D2 may be less than the diameter of the accommodation groove 1332D. Thus, a plurality of accommodation grooves 1332D at one side surface and the other side surface of the body 1331D may alternate with each other in a zigzag manner.

The accommodation grooves 1332D may form a plurality of rows. As illustrated in FIG. 10, a plurality of accommodation grooves 1332D may be spaced apart from each other in the lengthwise direction of the body 1331D (e.g., the X-axis direction) to form one row. Also, a plurality of rows of accommodation grooves 1332D may be provided in the heightwise direction of the body 1331D (e.g., the Z-axis direction). The accommodation grooves 1332D in adjacent rows may be at different positions in the lengthwise direction of the body 1331D. For example, a line passing through the center of one accommodation groove 1332D in a first row may extend between two adjacent accommodation grooves 1332D in a second row. In FIG. 10, the accommodation groove 1332D exposed upward may refer to the accommodation groove 1332D that is above in the heightwise direction of the body 1331D, and the accommodation groove 1332 partially covered between two adjacent accommodation grooves 1332D may refer to the accommodation groove 1332D that is below in the heightwise direction.

A plurality of accommodation grooves 1332D may be spaced apart from each other in the lengthwise direction of the body 1331D and may form a plurality of rows in the heightwise direction of the body 1331D, and a plurality of accommodation grooves 1332D included in any one row may alternate with a plurality of accommodation grooves 1332D included in an adjacent row in the lengthwise direction of the body 1331D. Thus, the plurality of accommodation grooves 1332D may form a plurality of rows that alternate in a zigzag manner in the widthwise direction of the body 1331D and alternate in a zigzag manner in the heightwise direction of the body 1331D.

A buffering member 1333D may be applied to each of the plurality of accommodation grooves 1332D. Thus, as illustrated in FIG. 10, the buffering members 1333D may also form a plurality of rows that alternate in a zigzag manner at one side surface and the other side surface of the body 1331D and alternate in a zigzag manner in the heightwise direction of the body 1331D. A portion of each of the buffering members 1333D is accommodated in one of the accommodation grooves 1332D, and another portion of the buffering member 1333D may protrude to outside the body 1331DThus, the buffering members 1333D may contact another object if the molding part 133D is dropped. The molding part 133D may therefore improve the buffering effect by having the buffering members 1333D alternate on both side surfaces of the body 1331D. Also, the buffering members 1333D in different rows may be in a zigzag manner, thereby preventing an impact from being applied to the space between adjacent buffering members 1333D if the molding part 133D is dropped.

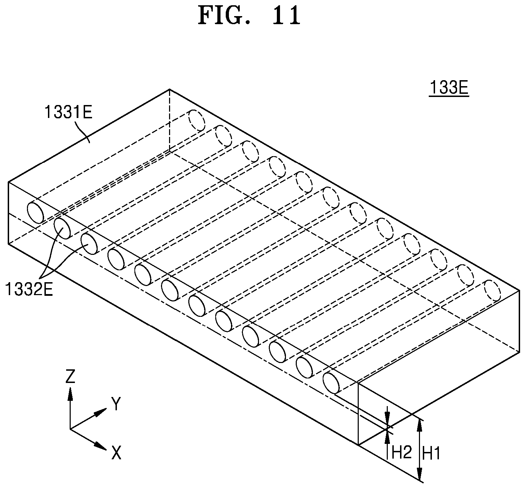

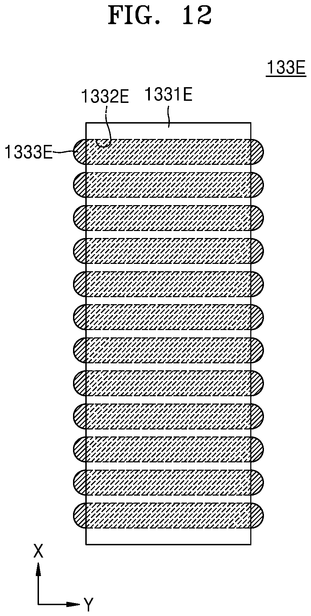

FIG. 11 illustrates a molding part 133E and FIG. 12 illustrates one surface of the molding part 133E.

The molding part 133E according to this embodiment may have a different configuration in the accommodation grooves 1332E and the buffering members 1333E compared to the molding parts according to the above-described embodiments. Hereinafter, for convenience of description, the molding part 133E will be described focusing on aspects different from that of the above-described molding parts, and other aspects of the molding part 133E may be the same as that of the above-described molding parts.

The molding part 133E may include a body 1331E, accommodation grooves 1332E, and buffering members 1333E.

A plurality of accommodation grooves 1332E may be formed to extend between both side surfaces of the body 1331E. That is, unlike the accommodation grooves according to the above-described embodiments, the accommodation grooves 1332E may be formed to pass through the body 1331E to between one side surface and the other side surface in the widthwise direction of the body 1331E. The plurality of accommodation grooves 1332E may be apart from each other in the lengthwise direction of the body 1331E. The accommodation grooves 1332E may be coaxial with the body 1331E, and the diameters of the accommodation grooves 1332E at both of its ends may be 40 % or less, 30 % or less, or 20 % or less of a height H1 of the body 1331E.

The accommodation grooves 1332E may have a shape such that the cross-sectional area thereof varies in the widthwise direction of the body 1331E. The accommodation groove 1332E may have a cylindrical shape or may have a shape in which the cross-sectional area thereof increases gradually toward the center portion of the body 1331E in the widthwise direction thereof.

The accommodation grooves 1332E may be above the center portion of the body 1331E in the heightwise direction of the body 1331E. As illustrated in FIG. 11, the lower end of the accommodation groove 1332E may be spaced apart from the center portion of the body 1331E by a height H2. Thus, a part (e.g., FETs, P-ICs, and passive elements) inside of the molding part 133E may not interfere with the accommodation grooves 1332E and the buffering members 1333E.

A buffering member 1333E may be applied to each of the plurality of accommodation grooves 1332E. As illustrated in FIG. 12, the buffering members 1333E may fill the accommodation grooves 1332E and both ends of the buffering members 1333E may protrude to outside of the body 1331E at both side surfaces of the body 1331E. Both ends of the buffering member 1333E in the widthwise direction may have a shape that is convex outward from the body 1331E and the shape may be a hemisphere or a partially-cut sphere.

The molding part 133E may improve the buffering effect by allowing the buffering members 1333E to pass through the body 1331E in the widthwise direction thereof. The buffering members 1333E may fill the accommodation grooves 1332E, and thereby not only absorb an impact if the molding part 133E is dropped and contacts an external object, but also effectively absorb an impact applied to the body 1331E.

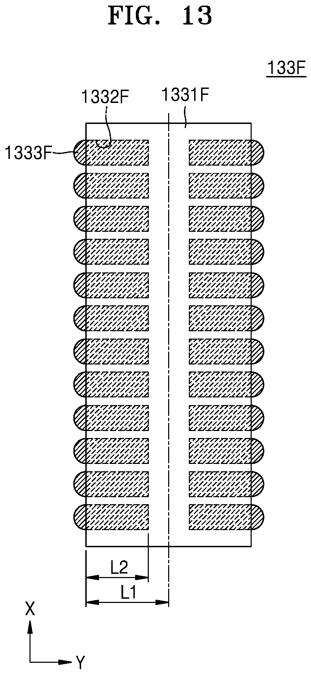

FIG. 13 illustrates one surface of a molding part 133F.

The molding part 133F according to this embodiments may have a different configuration in the accommodation grooves 1332F and the buffering members 1333F, compared to the molding parts according to the above-described embodiments. Hereinafter, for convenience of description, the molding part 133F will be described focusing on aspects different from that of the above-described molding parts, and the other aspects of the molding part 133F may be the same as that of the above-described molding parts.

The molding part 133F may include a body 1331F, accommodation grooves 1332F, and buffering members 1333F.

The accommodation grooves 1332F may be formed at each of both side surfaces of the body 1331F, and a plurality of accommodation grooves 1332F may be positioned apart from each other in the lengthwise direction of the body 1331F. The accommodation grooves 1332F may have a length L2, and the length L2 may be less than a length L1 corresponding to the half of the width of the body 1331F. For example, unlike the accommodation grooves 1332E passing through the body 1331E described above, the accommodation grooves 1332F according to the present embodiments may be formed at each of both side surfaces of the body 1331F, and the accommodation grooves 1332F formed in both side surfaces of the body 1331F are not open to each other.

In the widthwise direction of the body 1331F (e.g., the Y-axis direction), the inner end portion of the accommodation groove 1332F may be closer to the center portion of the body 1331F than to the outer surface of the body 1331F. The length L2 from a side surface of the body 1331F to the inner end portions of the accommodation grooves 1332F may be about 55 % to about 95 % of the length L1 from the side surface of the body 1331F to the center of the body 133F in the widthwise direction. For example, the length L2 of the accommodation grooves 1332F may be about 60 % to about 90 % of the length L1. The accommodation grooves 1332F may have a rectangular hexahedral shape or a similar shape. Thus, the buffering members 1333F may be more stably accommodated in the accommodation grooves 1332F and may thereby not be separated from the accommodation groove 1332F even in the event of an external impact to the body 1331F.

The lower end of the accommodation groove 1332F may be above the center portion of the body 1331F so that the accommodation groove 1332F may not interfere with a part (e.g., FETs, P-ICs, and passive elements) in the molding part 133F.

A buffering member 1333F may be applied to each of the plurality of accommodation grooves 1332F. As illustrated in FIG. 13, the buffering members 1333F may be applied inside the accommodation grooves 1332F, with ends of the buffering members 1333F contacting the inner surfaces of the accommodation grooves 1332F, and opposite ends of the buffering members 1333F protruding to outside the side surface of the body 1331F. The ends of the buffering members 1333E may have a shape that is convex outward from the side surface of the body 1331F and may have the shape of a hemisphere or a partially-cut sphere.

The molding part 133F may improve the buffering effect because a portions of the buffering members 1333F protrude to outside of the body 1331F and the buffering members 1333F are deeply accommodated in the accommodation grooves 1332F. The buffering members 1333F may fill the accommodation grooves 1332F, and, thus, not only absorb an impact if the molding part 133F is dropped and contacts an external object, but also effectively absorb an impact applied to the body 1331F. Also, the buffering members 1333F may be more stably accommodated in the accommodation grooves 1332F and, thus, may not be easily separated from the accommodation grooves 1332F.

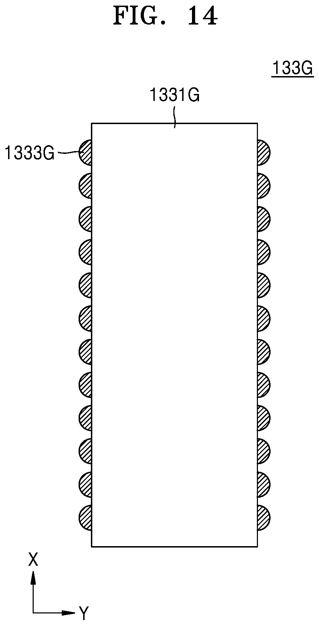

FIG. 14 illustrates one surface of a molding part 133G.

Compared to the molding part 133 according to the above-described embodiments, the molding part 133G according to this embodiment may not include accommodation grooves and may have differently shaped buffering members 1333G. Hereinafter, for convenience of description, the molding part 133G will be described focusing on aspects that are different from the aspects of the molding parts described above, and other aspects of the molding part 133G will be the same as that of the molding parts described above.

As illustrated in FIG. 14, the molding part 133G includes a body 1331G and buffering members 1333G. The plurality of buffering members 1333G may be on both side surfaces of the body 1331G. The buffering members 1333G may have the shape of a hemisphere or a partially-cut sphere and may be positioned at the side surface of the body 1331G without being inserted into the body 1331G. For example, the molding part 133G may include a plurality of buffering members 1333G on both side surfaces of the body 1331G, without accommodation grooves in which the buffering members 1333G are accommodated. Thus, the plurality of buffering members 1333G may be provided on both side surfaces of the body 1331G in the widthwise direction, and the side surfaces where the plurality of buffering members 1333G and the body 1331G contact each other may be on the same plane.

A plurality of buffering members 1333G at one side surface of the body 1331G and a plurality of buffering members 1333G on the other side surface of the body 1331G may be at the same position in the lengthwise direction of the body 1331G. In other embodiments, a plurality of buffering members 1333G at a first side surface of the body 1331G may be positioned such that a line through a center portions of the buffering members 1333G on the first side surface in the lengthwise direction extends through center portions of a plurality of buffering members 1333G on the second side surface of the body 1331G. The buffering members 1333G may include silicone or UV coating agents.

The molding part 133G may absorb an impact if the molding part 133G is dropped. The buffering members 1333G may be provided to the body 1331G without the need to for accommodation grooves being provided in the body 1331G.

In the battery pack according to embodiments of the present disclosure, a molding part of a protection circuit module may include an accommodation groove and a buffering member accommodated in the accommodation groove, thereby preventing damage to the molding part and an applied impact if the molding part is dropped.

In the battery pack according to embodiments of the present disclosure, buffering members may be accommodated in a plurality of accommodation grooves are concaved relative to a molding part and thereby absorb an impact applied to the molding part.

The battery pack according to embodiments of the present disclosure may include a plurality of buffering members in the lengthwise direction and/or the heightwise direction, thus absorbing an impact applied to the molding part.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack comprising:
a battery cell comprising one or more electrode tabs;
a case accommodating the battery cell; and
a protection circuit module comprising a substrate, one or more substrate tabs provided on the substrate and connected to the one or more electrode tabs, and a molding part provided on the substrate,
wherein the molding part comprises:
a body; and
a plurality of buffering members provided on the body.

2. The battery pack according to claim 1, wherein the buffering members are provided on side surfaces of the body that are opposite to each other in a widthwise direction of the body.

3. The battery pack according to claim 1 or claim 2, wherein the molding part further comprises a plurality of accommodation grooves concaved inward in side surfaces of the body, and
wherein the plurality of buffering members is provided in the plurality of accommodation grooves.

4. The battery pack according to claim 3, wherein a portion of each of the buffering members is accommodated in one of the accommodation grooves and another portion of each of the buffering members protrudes outward from one of the side surfaces of the body.

5. The battery pack according to claim 3 or claim 4, wherein the accommodation grooves are spaced apart from each other in a lengthwise direction of the body and form a plurality of rows in a heightwise direction of the body.

6. The battery pack according to claim 5, wherein:
(i) the accommodation grooves included in one row are coaxial with the accommodation grooves included in an adjacent row in the lengthwise direction of the body; or
(ii) the accommodation grooves included in one row alternate with the accommodation grooves included in an adjacent row in the lengthwise direction of the body.

7. The battery pack according to claim 5 or claim 6, wherein:
(i) a distance between centers of the accommodation grooves included in a row is greater than diameters of the accommodation grooves; and/or
(ii) a distance between end portions of two adjacent accommodation grooves included in adjacent rows and adjacent to each other in the heightwise direction of the body is less than diameters of the accommodation grooves.

8. The battery pack according to any one of claims 3 to 7, wherein the accommodation grooves at one of the side surfaces of the body alternate with the accommodation grooves at the other side surface of the body in a widthwise direction of the body.

9. The battery pack according to claim 8, wherein:
(i) lines through the centers of the accommodation grooves in the other side surface of the body extend to centers between two adjacent accommodation grooves in the one side surface of the body; and/or
(ii) the accommodation grooves are spaced apart from each other in a lengthwise direction of the body and form a plurality of rows in a heightwise direction of the body, and
wherein the accommodation grooves included in one row alternate with the accommodation grooves included in an adjacent row in the lengthwise direction of the body.

10. The battery pack according to any one of claim 3 to 9, wherein:
(i) the accommodation grooves have a hemisphere shape or a partially-cut sphere shape; and/or
(ii) inner end portions of the accommodation grooves are closer to an outer surface of the body than the inner end portions are to a center portion of the body in a widthwise direction of the body.

11. The battery pack according to any one of claims 3 to 9, wherein:
(i) a size of the buffering members accommodated in the accommodation grooves is larger than in a size of the buffering members protruding outside of the accommodation grooves; and/or
(ii) inner end portions of the accommodation grooves are closer to a center portion of the body than the inner end portions are to an outer surface of the body in a widthwise direction of the body.

12. The battery pack according to claim 1, wherein the molding part further comprises a plurality of accommodation grooves extending between one side surface and the other side surface in a widthwise direction of the body, and
wherein the plurality of buffering members fill the plurality of accommodation grooves such that both ends of each of the buffering members protrude outward beyond side surfaces of the body.

13. The battery pack according to claim 12, wherein, in a heightwise direction of the body, lower ends of the accommodation grooves are above a center of the body.

14. The battery pack according to claim 12, wherein, in the widthwise direction of the body, cross-sectional areas of the accommodation grooves increase toward a center portion of the body.

15. The battery pack according to claim 1, wherein the plurality of buffering members are positioned on side surfaces of the body in a widthwise direction of the body, and
wherein the side surfaces at which the buffering members and the body contact each other are on plane.
